(19) Europäisches Patentamt

European Patent Office

Office européen des brevets

(11) EP 0 611 960 B1

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.⁶: **G01M 7/04**, G01M 17/04

(21) Anmeldenummer: **94102441.6**

(22) Anmeldetag: **17.02.1994**

(54) **Verfahren zum Prüfen eines Schwingungsdämpfers eines Kraftfahrzeuges**

Method for examining a vibration damper of a vehicle

Méthod pour examiner un amortisseur de vibration d'un véhicule

(84) Benannte Vertragsstaaten:
**ES FR GB IT**

(30) Priorität: **18.02.1993 DE 4305048**

(43) Veröffentlichungstag der Anmeldung:
**24.08.1994 Patentblatt 1994/34**

(73) Patentinhaber: **HOFMANN WERKSTATT-TECHNIK GMBH D-64319 Pfungstadt (DE)**

(72) Erfinder:
- **Isermann, Rolf, Prof. Dr.-Ing. 64342 Seeheim-Jugenheim 1 (DE)**
- **Busshardt, Joachim, Dipl.-Ing. D-61381 Friedrichsdorf (DE)**

(74) Vertreter: **Nöth, Heinz, Dipl.-Phys. Patentanwalt, Mozartstrasse 17 80336 München (DE)**

(56) Entgegenhaltungen:
EP-A- 0 359 337    EP-A- 0 476 746
EP-A- 0 491 440    WO-A-89/12811
US-A- 4 297 888    US-A- 4 376 387
US-A- 5 189 615

- PATENT ABSTRACTS OF JAPAN vol. 15, no. 386 (M-1163) 30. September 1991 & JP-A-03 157 214 (TOYOTA MOTOR CORP.) 5. Juli 1991
- PROCEEDINGS OF THE 1993 AMERICAN CONTROL CONFERENCE, Bd.1-3, 2. Juni 1993, SAN FRANCISCO, CAL. Seiten 716 - 720, XP000419194 S. LEONHARDT ET AL. 'parameter estimation of shock absorbers with artificial neural networks.'

**Beschreibung**

Die Erfindung betrifft ein Verfahren zur Prüfung eines Schwingungsdämpfers eines Kraftfahrzeugs, bei dem durch Fußpunkterregung Schwingungen über ein auf einer Radaufstandsfläche aufstehendes Kraftfahrzeugrad in die den zu prüfenden Schwingungsdämpfer enthaltende Radaufhängung des Kraftfahrzeugs eingeleitet werden und dabei das Dämpfungsverhalten bestimmt wird.

Zur Prüfung der Verkehrssicherheit von Kraftfahrzeugen ist es u.a. erforderlich, auch den jeweiligen in der Radaufhängung des Kraftfahrzeugs enthaltenen Schwingungsdämpfer in eingebautem Zustand zu prüfen. Bei der Schwingungsdämpfer(Stoßdämpfer)-Prüfung steht das jeweilige Rad des Kraftfahrzeugs mit seinem Reifen auf einer Radaufstandsfläche, die von einem mechanisch oder hydraulisch wirkenden Antrieb in Schwingung versetzt wird, auf. Dabei werden bisher Kennlinien in Form von Kraft-Weg- oder Kraft-Geschwindigkeits-Diagrammen ermittelt.

Aufgabe der Erfindung ist es, ein Verfahren der eingangs genannten Art zu schaffen, mit dem eine Prüfung des Schwingungsdämpfers ohne Eingriff in das Fahrwerk möglich ist, wobei man mit Meßgrößen auskommt, die von außen erfaßt werden können.

Diese Aufgabe wird erfindungsgemäß dadurch gelöst, daß die Differenzen aus den Bewegungsamplituden und den -geschwindigkeiten des Rades und denen des Fahrzeugaufbaus mit der Beschleunigung des Rades oder mit der dynamischen Radaufstandskraft (Fußpunkterregerkraft) in Beziehung gesetzt werden, wobei der Dämpfungskoeffizient nach einem Parameterschätzverfahren aus dieser Beziehung geschätzt wird, und daß zur Qualitätsprüfung des Schwingungsdämpfers der geschätzte Dämpfungskoeffizient mit einem Referenzwert, verglichen wird, wobei für die Qualitätsprüfung festgestellt wird, ob die Abweichung vom Referenzwert innerhalb eines Toleranzbereiches liegt.

Für die Fußpunktanregung des Kaftfahrzeugrades kann ein Sinussweep von 0 bis 25 Hz bzw. 25 bis 0 Hz mit fester Amplitude, beispielsweise mit Hilfe eines rotierenden Exzenders, zum Einsatz kommen. Ferner kann ein Pseudo-Rausch-Binärsignal, z.B. mittels Rolle mit Schlagleisten, erzeugt werden. Mittels von außen anzubringenden Sensoren können die statische und dynamische Radlast sowie die Reifen- und Fahrzeugaufbaueinfederung und die Rad- und Fahrzeugaufbaubeschleunigung gemessen werden.

Bei der Erfindung wird aus den geschätzten Parametern ein die tatsächlich vorhandene Dämpfung darstellender physikalischer Dämpfungskoeffizient geschätzt und mit dem Referenzwert verglichen.

Anhand der Figuren wird die Erfindung noch näher erläutert. Es zeigt:

Figur 1: eine schematische Darstellung des vom Fahrzeugaufbau und dem Fahrzeugrad gebildeten Schwingungssystems;

Figur 2: ein Diagramm, das den Zusammenhang zwischen normierter vertikaler Beschleunigung des Fahrzeugaufbaus und normierter dynamischer Radlastschwankung mit verschiedenen physikalischen Koeffizienten als Parameter zeigt;

Figur 3: eine schematische Darstellung eines ersten Ausführungsbeispiels; und

Figur 4: eine schematische Darstellung eines zweiten Ausführungsbeispiels.

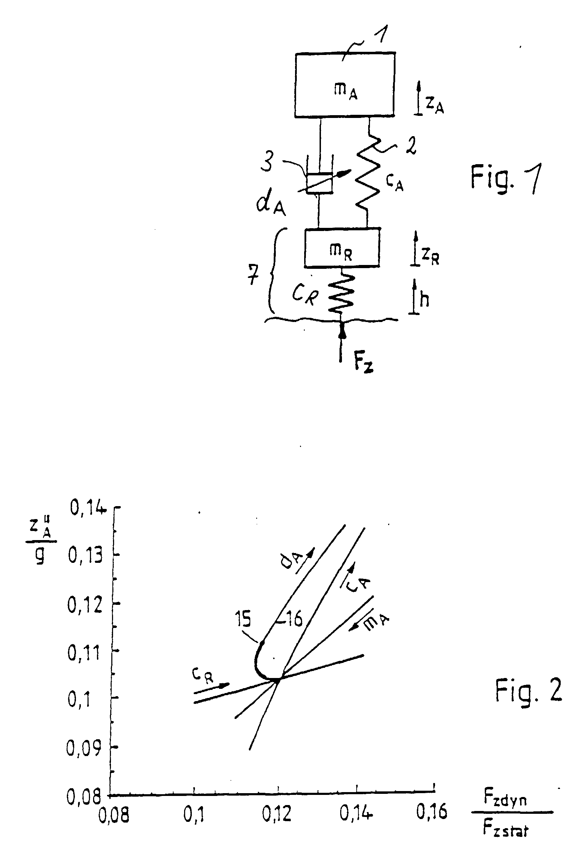

Figur 1 stellt schematisch das aus einem Fahrzeugaufbau 1, einer Feder 2, einem Schwingungsdämpfer (Stoßdämpfer) 3 und einem Rad 7 bestehende Schwingungssystem der Radaufhängung des Fahrzeugs dar. Das Rad 7 ist ebenfalls als Schwingungssystem dargestellt mit einer Masse $m_R$ und einer Federsteifigkeit $c_R$, die im wesentlichen vom Reifendruck $p_R$ abhängt. Die Federsteifigkeit der Feder 2 wird mit $c_A$ bezeichnet. $d_A$, ist der Dämpfungskoeffizient des Schwingungsdämpfers 3. Die vertikalen Wege des Aufbaus 1 und des Rades 7 sind mit $z_A$, und $z_R$ bezeichnet. Die Radlast $F_Z$ setzt sich aus der Gewichtskraft $E_{Zstat}$ und den dynamischen Radlastschwankungen $F_{Zdyn}$ wie folgt zusammen:

$$F_Z = F_{Zstat} + F_{Zdyn} = (m_A + m_R)g + F_{Zdyn}.$$

Figur 2 zeigt den prinzipiellen Zusammenhang zwischen der normierten vertikalen Aufbaubeschleunigung $z_A''/g$ und der normierten dynamischen Radlastschwankung $F_{Zdyn}/F_{Zstat}$. Im Sinne einer Minimierung beider Werte, d.h. einer möglichst geringen Aufbaubeschleunigung zur Erzielung eines größeren Komforts und einer möglichst geringen dynamischen Radlastschwankung zur Erzielung einer größeren Fahrsicherheit soll der Dämpfungskoeffizient $d_A$ möglichst in einen hervorgehobenen Bereich 15 einer Dämpfungskoeffizientenkurve 16 liegen. Die Kurve 16 ändert sich mit Änderungen der Masse $m_A$ des Aufbaus 1 und der Federsteifigkeiten $c_A$ des Aufbaus und $c_R$ des Reifens 7. Der Schätzwert des physikalischen Dämpfungskoeffizienten $d_A$ läßt sich auf verschiedene Art und Weise aus den Meßwerten bestimmen.

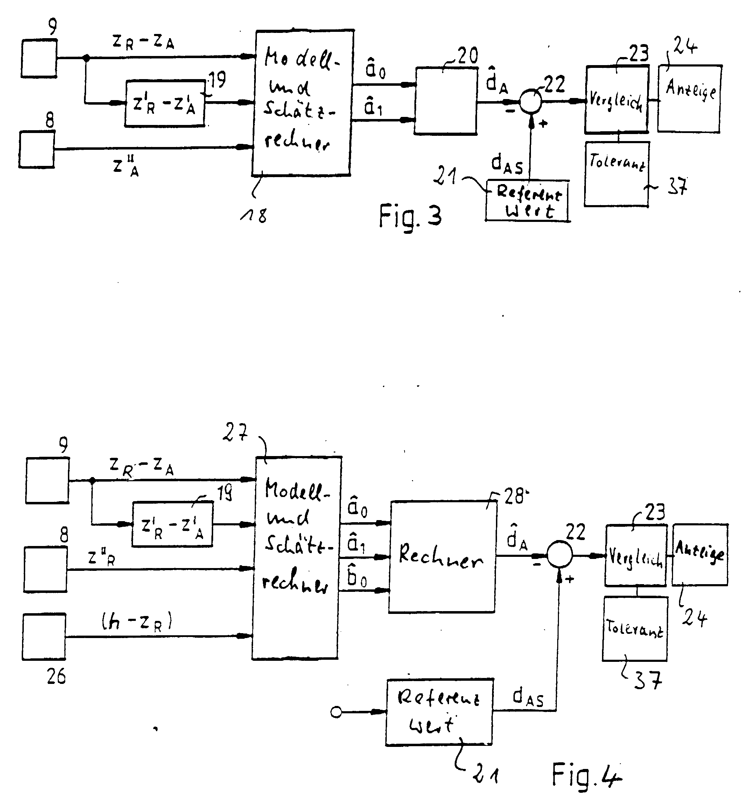

Bei dem Ausführungsbeispiel nach Figur 3 wird von einem Sensor 9 die Einfederung, d.h. die Wegdifferenz zwischen Rad 7 und Aufbau 1 einerseits zu einem mathematischen Modell- und Schätzrechner 18 und andererseits einer Rechnerstufe 19 zur Berechnung der Differenz zwischen der Radgeschwindigkeit $Z'_R$ und der Aufbaugeschwindigkeit $Z'_R$ geleitet. Von einem Beschleunigungssensor 8 wird die Aufbaubeschleunigung $Z''_A$ dem mathematischen Modell zugeführt. Der mathematische Modellrechner entwickelt die Gleichung

$$z_A" = a_0(z_R - z_A) + a_1 (z_R' - z_A').$$

Durch ein an sich bekanntes Parameterschätzverfahren werden die Parameter $\hat{a}_0$ und $\hat{a}_1$ geschätzt. Ein geeignetes Verfahren zum Schätzen von Parametern ist beispielsweise in Isermann R.: "Estimation of Physical Parameters for Dynamic Processes with Application to an Industrial Robot", International Journal of Control, Vol. 55 (1992) No. 6, pages 1287 - 1291, angegeben.

Aus den geschätzten Parametern $\hat{a}_0$ und $\hat{a}_1$ wird in einem Rechner 20 ein geschätzter Istwert des Dämpfungskoeffizienten $\hat{d}_A$ berechnet nach der Formel $\hat{d}_A = \hat{a}_1 . m_A$. In einem Subtrahierer 21 wird der so berechnete Dämpfungskoeffizient von einem aus einem Speicher 22 zugeführten Referenzwert $d_{AS}$ subtrahiert. Die Differenz wird einem Vergleicher 23 zugeführt, der feststellt, ob die Differenz in einem Toleranzbereich liegt, der von einem Speicher 37 geliefert wird. Eine Anzeigeeinrichtung 24 zeigt das Ergebnis der Qualitätsprüfung an.

Der im Speicher 21 enthaltene Referenzwert $d_{AS}$ des Dämpfungskoeffizienten ist ausgewählt aus dem Bereich 15 der Dämpfungskoeffizientenkurve 16 in Figur 2, deren Verlauf vom jeweiligen Fahrzeugtyp abhängig ist. Wenn der Dämpfungskoeffizient mehr in Richtung auf erhöhten Fahrkomfort geprüft werden soll, wird der Sollwert auf den Minimalwert der normierten Beschleunigung des Fahrzeugaufbaus 1 innerhalb des Kurvenbereichs 15 gelegt. Wenn die Prüfung des Schwingungsdämpfers mehr in Richtung auf Fahrzeugsicherheit durchgeführt wird, wird der Sollwert so festgelegt, daß die normierte dynamische Radlastschwankung einen Minimalwert hat. Letzterer Sollwert wird bevorzugt für den Dämpfungskoeffizienten gewählt, da, wie die Kurvendarstellung in Figur 2 zeigt, hierbei auch noch ein ausreichender Fahrkomfort, d.h. eine niedrige normierte Beschleunigung des Fahrzeugaufbaus, erreicht wird.

Der im Speicher 37 gespeicherte Toleranzbereich für den zulässigen Dämpfungskoeffizienten $d_A$ wird so bemessen, daß er den Kurvenbereich 15 der Dämpfungskoeffizientenkurve 16 der Figur 2 umfaßt.

Bei dem in Figur 4 dargestellten Ausführungsbeispiel ist außer den Sensoren 8, 9 ein weiterer Sensor 26 vorgesehen, der die Einfederung des Reifens mißt, also die Differenz der Unebenheiten der Fahrbahn, welche z.B. durch eine Rolle mit Schlagleiste simuliert werden kann, und des Absolutweges des Rades. Die gemessenen Größen sowie die im Rechner 19 berechnete Geschwindigkeitsdifferenz werden einem Modell- und Schätzrechner 27 zugeführt, der die Gleichung

$$z_R" = -a_0(z_R - z_A) - a_1 (z_R' - z_A') + b_0(h - z_R)$$

entwickelt. Die im Rechner 27 geschätzten Parameter $\hat{a}_0$, $\hat{a}_1$ und $\hat{b}_0$ gelangen zu einem Rechner 28, der die geschätzten Istwerte $\hat{d}_A$ des Dämpfungskoeffizienten, der Reifenfedersteifigkeit $\hat{c}_R$ und der Federsteifigkeit $\hat{c}_A$ entsprechend den Gleichungen

$$a_0 = c_A/m_R, \ a_1 = d_A/m_R, \ b_0 = c_R/m_R.$$

bestimmt.

Aus der Kräftebilanz des Aufbaus läßt sich eine weitere Schätzgleichung auch direkt ableiten:

$$z_R" = a_0(z_R - z_A) + a_1(z_R' - z_A') + (z_R" - z_A")$$

mit

$$a_0 = c_A/m_A, \ a_1 = d_A/m_A,$$

So lassen sich ohne weitere Meßgrößen die geschätzten Koeffizienten $\hat{d}_A$, $\hat{c}_A$ und die Aufbaumasse $m_A$ bestimmen. $(z_R" - z_A")$ kann aus der Meßgröße $(z_R - z_A)$ berechnet werden.

Die Auswertung von $d_A$ und $d_{AS}$ für die Schwingungsdämpferprüfung erfolgt wie beim Ausführungsbeispiel der Figur 3.

Im folgenden sind mögliche Gleichungen zur Schätzung der Parameter aufgeführt unabhängig davon, ob sie im Zusammenhang mit den Ausführungsbeispielen bereits erwähnt sind:

$$(z_R\text{-}z_A) = (m_A/c_A)z_A'' - (d_A/c_A)(z_R'\text{-}z_A')$$

$$z_R'' = (z_R/m_R)(h\text{-}z_R) - (c_A/m_R)(z_R\text{-}z_A)-(d_A/m_R)(z_R'\text{-}z_A')$$

$$z_R'' = (c_A/m_A)(z_R\text{-}z_A) + (d_A/m_A)(z_R'\text{-}z_A') + (z_R''\text{-}z_A'')$$

$$F_c = m_A z_R'' - (d_A/c_A)F_c' - (m_A/c_A)F_c''$$

Mit diesen Schätzgleichungen lassen sich aus gemessenen Prozeßgrößen unter Verwendung von bekannten Koeffizienten die folgenden Koeffizienten gemäß folgender Tabelle schätzen:

| Meßgröße | bek. Koeff. | gesch. Koeff. |
|---|---|---|
| $z_R\text{-}z_A$, $z_A''$ | $c_A$ | $d_A$, $m_A$ |
| $z_R\text{-}z_A$, $z_R''$, $h\text{-}z_R$ | $m_R$ | $d_A$, $c_A$, $c_R$ |
| $z_R\text{-}z_A$, $z_R''$ | $c_A$ | $d_A$, $m_A$ |
| $F_c$, $z_R''$ | - | $d_A$, $m_A$, $c_A$ |

Eine weitere Schätzgleichung enthält die dynamische Radlastschwankung $R_{Zdyn}$ und die Einfederung $z_R\text{-}z_A$. Diese Gleichung läßt sich ebenfalls vorteilhaft für Schwingungsdämpferuntersuchungen auf einem Prüfstand verwenden, wobei $F_{Zdyn}$ leicht meßbar ist. Die Gleichung lautet:

$$b_0 F_{Zdyn} = (z_R\text{-}z_A) + a_1(z_R'\text{-}z_A') + a_2(z_R''\text{-}z_A'')$$

mit

$$b_0 = m_A/(m_A+m_R)c_A$$

$$a_1 = d_A/c_A, \qquad a_2 = m_A m_R/(m_A+m_R)c_A.$$

Die Summe $(m_A+m_R)$ läßt sich in einfacher Weise durch statische Messung der Gewichtskraft $F_{Zstat}$ bestimmen, während die Einfederung durch ein geeignetes Meßgerät gemessen werden kann.

Die Erfindung schafft ein Verfahren zur Prüfung des Schwingungsdämpfers des Fahrwerks eines Kraftfahrzeugs, bei dem Prozeßgrößen, welche mit einer vertikalen Bewegung des Fahrzeugs zusammenhängen, einem mathematischen Modell zugeführt werden, das den Zusammenhang zwischen der vertikalen Beschleunigung des Fahrzeugrades und des Fahrzeugaufbaus einerseits und geschätzen Parametern, die nach einem an sich bekannten Parameter-Schätzverfahren geschätzt werden, andererseits darstellt, und bei dem hieraus der Dämpfungskoeffizient als Schätzwert gewonnen werden und der Vergleich zwischen geschätztem Dänpfungskoeffizienten und Referenzwert für die Schwingungsdämpferprüfung durchgeführt wird.

## Patentansprüche

1. Verfahren zum Prüfen eines Schwingungsdämpfers (3) eines Kraftfahrzeugs, bei dem durch Fußpunkterregung Schwingungen über ein auf einer Radaufstandsfläche aufstehendes Kraftfahrzeugrad (7) in die den zu prüfenden Schwingungsdämpfer (3) enthaltende Radaufhängung des Kraftfahrzeugs eingeleitet werden und dabei das Dämpfungsverhalten bestimmt wird,

dadurch **gekennzeichnet**,

daß die Differenzen aus den Bewegungsamplituden ($z_R$-$z_A$) und den -geschwindigkeiten ($z_R'$-$z_A'$) des Rades (7) und denen des Fahrzeugaufbaus (1) mit der Beschleunigung des Rades ($z_R''$) oder der dynamischen Radaufstandskraft in Beziehung gesetzt werden und der Dämpfungskoeffizient ($d_A$) nach einem Parameterschätzverfahren aus dieser Beziehung geschätzt wird, daß zur Qualitätsprüfung des Schwingungsdämpfers (3) der geschätzte Dämpfungskoeffizient ($d_A$) mit einem Referenzwert verglichen wird und für die Qualitätsprüfung festgestellt wird, ob eine Abweichung vom Referenzwert innerhalb eines Toleranzbereiches liegt.

## Claims

1. A method of testing a shock absorber (3) of a motor vehicle, wherein by footprint excitation oscillations are transmitted by way of a motor vehicle wheel (7) standing on a wheel support surface to the motor vehicle wheel suspension including the shock absorber (3) to be tested and in that operation the damping characteristic is determined,

   characterised in that

   the differences of the movement amplitudes ($Z_R$-$Z_A$) and speeds ($Z'_R$-$Z'_A$) of the wheel (7) and those of the vehicle body (1) are related to the acceleration of the wheel ($Z''_R$) or the dynamic wheel support force and the damping coefficient ($d_A$) is estimated from said relationship in accordance with a parameter estimation process, and that for quality testing of the shock absorber (3) the estimated damping coefficient is compared to-a reference value and for quality testing it is ascertained whether a deviation from the reference value lies within a tolerance range.

## Revendications

1. Procédé pour vérifier un amortisseur (3) de vibrations d'un véhicule automobile, dans lequel des vibrations par l'intermédiaire d'une roue de véhicule automobile, par excitation de base, sont envoyées dans la suspension du véhicule automobile qui comprend l'amortisseur (3) de vibrations à vérifier et le comportement d'amortissement est alors déterminé,

   caractérisé en ce que,

   les différences des amplitudes ($z_R$-$z_A$) de déplacement et des vitesses ($z_R'$-$z_A'$) de déplacement de la roue (7) et celles de la carrosserie (1) de véhicule automobile sont mises en relation avec l'accélération de la roue ($z_R''$) ou avec la force de contact de roue dynamique et le coefficient ($d_A$) d'amortissement est estimé à partir de cette relation par un procédé d'estimation de paramètres, en ce que pour la vérification en termes de qualité de l'amortisseur (3) de vibrations le coefficient ($d_A$) d'amortissement estimé est comparé à une valeur de référence et il est déterminé, pour la vérification de la qualité si un écart par rapport à la valeur de référence se trouve à l'intérieur d'une zone de tolérance.

Fig. 1

Fig. 2

Fig. 3

Fig. 4